# EUROPÄISCHE PATENTSCHRIFT

(11) **EP 0 877 876 B1**
(45) Veröffentlichungstag und Bekanntmachung des Hinweises auf die Patenterteilung: **30.05.2001**
(21) Anmeldenummer: 97902227.4
(22) Anmeldetag: 25.01.1997
(51) Int. Cl.: F16H 45/02

(54) **NASSKUPPLUNG FÜR HOHE REIBLEISTUNGEN**
HYDRAULIC CLUTCH FOR HIGH FRICTION APPLICATIONS
EMBRAYAGE HYDRAULIQUE POUR APPLICATIONS A HAUT NIVEAU DE FRICTION

(30) Priorität: 01.02.1996 DE 19603596
(43) Veröffentlichungstag der Anmeldung: 18.11.1998
(73) Patentinhaber: ZF FRIEDRICHSHAFEN Aktiengesellschaft, 88038 Friedrichshafen (DE)
(72) Erfinder: HAUPT, Josef, D-88069 Tettnang (DE)
(86) Internationale Anmeldenummer: EP9700343
(87) Internationale Veröffentlichungsnummer: WO9728389

(56) Entgegenhaltungen:
- DE-A- 4 420 959
- DE-A- 4 423 640
- DE-A- 19 508 855
- US-A- 4 674 616
- US-A- 5 209 330
- US-A- 5 248 016

## Beschreibung

Die Erfindung betrifft eine Naßkupplung mit den Merkmalen nach dem Oberbegriff von Anspruch 1.

Hydrodynamische Drehmomentwandler sind seit der Einführung automatischer Getriebe das Bindeglied zwischen einer Antriebsmaschine und dem eigentlichen Getriebe. Ein Wandler ermöglicht zum einen durch den Schlupf ein komfortables, ruckfreies Anfahren und dämpft gleichzeitig damit Drehungleichförmigkeiten des Verbrennungsmotors. Zum anderen stellt die prinzipbedingte Momentenüberhöhung ein großes Anfahrmoment zur Verfügung.

Im Regelfall besteht ein Wandler in engerem Sinne aus einem Wandlergehäuse, einem Pumpenrad, einem Leitrad und einem Turbinenrad. Indem das Drehmoment über die hydrodynamischen Kräfte vom Pumpenrad über das Leitrad auf das Turbinenrad übertragen wird, entsteht zwischen dem Pumpenrad und dem Turbinenrad ein Schlupf. Dies führt zu einem Wirkungsgradverlust.

Um den Wirkungsgrad zu steigern, wurde eine Überbrükungskupplung eingeführt, die den Wandler in bestimmten Nenndrehzahlen überbrückt. Die Überbrückungskupplung kann vor dem Turbinenrad, also zwischen Wandlergehäuse und Turbinenrad, und nach dem Pumpenrad, also zwischen Pumpenrad und weiterer Getriebeeinheit, angebracht sein.

Durch die Überbrückungskupplung entsteht der Nachteil, daß die Schwingungsdämpfung verloren geht, die durch die Differenzdrehzahl zwischen Turbinenrad und Pumpenrad entsteht. Um dies auszugleichen, muß ein zusätzlicher Dämpfer angebracht oder die Kupplung selbst als Dämpfer ausgebildet sein.

Infolge beengter Platzverhältnisse innerhalb des Wandlers und der komplizierten Schwingungssysteme eines Automatgetriebes lassen sich mechanische Torsionsdämpfer nicht so auslegen, daß die Überbrückungskupplung schon bei niedrigen Motordrehzahlen und in den unteren Gängen geschlossen werden kann. Andernfalls tritt Karosseriedröhnen auf. Bei modernen, drehmomentoptimierten Motoren mit hohen Motormomenten, schon wenig oberhalb der Leerlaufdrehzahl, müssen steife Antriebsstränge verwendet werden, um ein Aufdrehen dieser zu vermeiden. Hierdurch wird die Eigenfrequenz zu höheren Drehzahlen verschoben und damit das Problem des Karosseriedröhnens verstärkt.

Leistungs- und hubraumstarke Quermotoren erfordern zunehmend eine schmale Bauweise des Wandlers. Ein mechanischer Torsionsdämpfer wirft damit erhebliche Probleme auf.

Mit einer geregelt schlupfenden Überbrückungskupplung wird ermöglicht, den Wandler schon bei niedrigen Fahrgeschwindigkeiten zu schließen, die Schwingungen in Bereichen kritischer Drehzahlen durch den Schlupf in der Überbrückungskupplung zu dämpfen, den Torsionsdämpfer einzusparen und den Benzinverbrauch weiter zu senken.

Torsionsschwingungen entstehen im Antriebsstrang, indem bei jeder Zündung des Verbrennungsgemisches in einem Zylinder eine Winkelbeschleunigung der Kurbelwelle entsteht, der eine Verzögerung durch die Kompression im nächsten Zylinder folgt. Dadurch schwankt die Winkelgeschwindigkeit zwischen einem Maximum und einem Minimum.

Mit zunehmender Motordrehzahl nimmt proportional 1/n die Drehungleichförmigkeit ab. Bei einer Drehzahl von typischerweise ca. 2 000 1/min werden Werte der Drehzahlschwankung erreicht, die mit weiter zunehmender Motordrehzahl kaum noch abnehmen. Der Verlauf des Winkelausschlages ist proportional 1/n, während die Schwingbreite der Winkelbeschleunigung nahezu drehzahlunabhängig ist. Daraus ergibt sich, daß in aller Regel oberhalb ca. 2 000 Motorumdrehungen die Überbrückungskupplung im Zugbetrieb geschlossen bleiben kann. Unterhalb 2 000 Motorumdrehungen steigt die Drehungleichförmigkeit rasch an, so daß die Überbrückungskupplung geöffnet oder geregelt schlupfend betrieben wird.

Im Motorschubbetrieb ist der Gasdruck im Zylinder wesentlich geringer als im Zugbetrieb, wodurch sich der kritische Bereich zu höheren Drehzahlen verschiebt. Damit steigt dagegen die Schwingbreite der Winkelbeschleunigung mit zunehmender Motordrehzahl stark an. Karosseriedröhnen im Schub wird daher meist bei Drehzahl weit über 2 000 1/min festgestellt. Für ein komfortables Fahren muß auch in diesem Fall die Überbrückungskupplung geöffnet oder geregelt werden.

Um eine ausreichende Torsionsschwingungsdämpfung zu erreichen, wird ein Schlupf von bis zu ca. 2 bis 3 % benötigt. Ein Schlupf von mehr als 2 bis 3 % bringt kaum eine weitere Dämpfungserhöhung.

Wird der Innenraum des Wandlers durch einen Kolben der Naßkupplung in zwei Räume geteilt, wobei ein kleinerer Raum durch den Kolben der Naßkupplung und einem Wandlergehäuse und ein größerer Raum durch den Kolben und dem Pumpenrad gebildet wird, so kann die Regelung dadurch erreicht werden, daß ein erhöhter Druck in den Pumpen-Turbinenraum geleitet und der Druck im Wandlerdeckel-Kupplungskolbenraum geregelt beeinflußt wird.

Zum weiteren kann eine Regelung dadurch erreicht werden, indem der kleine Wandlerraum entlüftet und der Druck im Pumpen-, Turbinenraum geregelt beeinflußt wird.

Eine Schaltlogig für eine Überbrückungskupplung kann beispielsweise so aussehen, daß ein Steuerdruck auf Ventile wirkt, die dann eine Leitung zum kleinen Wandlerraum entlüften und den Hauptdruck in den großen Wandlerraum leiten, wodurch der Kolben der Überbrückungskupplung geschlossen wird.

Eine Steuerung der Überbrückungskupplung wird durch eine Druckregelfunktion erreicht, die sich aus einem Kräftegleichgewicht von Steuerdruck, Federkraft und wirkendem Regeldruck an einem Stufenkolben ergibt. Zur Einstellung einer konstanten Differenzdrehzahl an der Überbrückungskupplung wird drehmomentproportional der Kupplungsdruck über den Steuerdruck eingestellt.

Aufgabe der geregelten Überbrückungskupplung ist es, durch möglichst geringen Schlupf die Torsionsschwingungen im Antrieb so weit zu dämpfen, daß kein Dröhnen oder Brummen hörbar wird.

Dies kann beispielsweise erreicht werden, indem der erforderliche Schlupf durch Kennlinien, die durch fahrzeugmotorspezifische Versuche oder abhängig von Drehungleichförmigkeiten festgelegt werden, bestimmt wird oder sich der Schlupf nach einem konstanten Sollwert richtet, der einem Regelkreis zugeführt wird.

Die grundlegende Problemstellung besteht darin, die bei Überbrückungskupplungen auftretenden hohen Reibleistungen zu beherrschen.

Die Problematik wird zudem durch neue Fahrstrategien verstärkt, bei welchen die Überbrückungskupplung schon im Bereich hoher Wandlungen geschlossen wird, um Kraftstoff zu sparen und die Fahreigenschaften, wie beispielsweise direktes Ansprechen auf Änderung der Gaspedalstellung, zu verbessern.

Bei Überlegungen, den Wandler durch eine nasse Anfahrkupplung zu ersetzen, tritt das Problem hoher Reibleistung ganz besonders in den Vordergrund.

Der Reibwertverlauf wird durch das Öl und den Reibbelag bestimmt.

Wird in einem Bereich der Überbrückungskupplung eine Temperaturspitze erreicht, die zu einer Schädigung des Öls führt, so wird dadurch der Reibwertverlauf verändert und zwar sinkt bei steigendem Schlupf der Reibwert m im Vergleich zum normalen ansteigenden Verlauf ab.

Dadurch wird das Ansteigen des Schlupfes nicht mehr durch ein gleichzeitiges Ansteigen des Reibwertes ausgeglichen, so sich kein stabiler Betriebspunkt einstellt. Zudem können Reibschwingungen durch beschädigtes Öl entstehen.

Grundsätzlich besteht also die Aufgabe darin, örtlich hohe Temperaturspitzen zu vermeiden und die Temperatur insgesamt unter der kritischen Temperatur zu halten, bei der das Öl geschädigt wird.

Bekannt ist, Reibbeläge mit verschiedenartigen Nuten zu versehen und diese mit einem möglichst großen Ölstrom, der durch die Nuten geführt wird, zu kühlen. Mit gezielter Gestaltung der Form der Nuten wird eine gleichmäßige, hohe Wärmeabfuhr angestrebt (siehe VDI-Bericht Nr. 649, 1987, S. 335 - 358).

In Fällen hoher Wärmeentwicklung wird die Wärme nicht in allen Bereichen des Reibbelags ausreichend abgeführt, da dieser nicht hinreichend durchströmt wird. Die dadurch verursachten Temperaturspitzen schädigen das Öl.

Zudem hängt der Volumenstrom des Öls vom Verschleiß der Reibbeläge ab, weil der Durchströmungsquerschnitt der Nuten mit dem Verschleiß des Reibbelags abnimmt.

Daneben hängt der Volumenstrom des Öls vom Betätigungsdruck der Überbrückungskupplung ab, wodurch bei hohen Betätigungsdrücken der für die Anpreßkraft wirksame Druck abfällt und die übertragbaren Kräfte der Überbrückungskupplung kleiner werden.

Die DE-A-44 23 640 zeigt eine Wandlerüberbrückungskupplung, welche Mittel zur Kühlung aufweist, indem zwei benachbarte Stahllamellen zusammengeschweißt sind, und einen Kanal zum Durchströmen von Kühlmittel bilden.

Die DE-A-44 20 959 zeigt einen Strömungswandler mit Wandlerüberbrückungskupplung, bei welchem ein Ölstrom durch eine Drosselstelle im Kolben strömt und anschließend Nuten im Reibbelag der Kupplung durchströmt, um die Leistungsfähigkeit der Kupplung zu erhöhen.

Daher ist es Aufgabe der Erfindung, eine hohe und gleichmäßige Wärmeabfuhr über die gesamte Reibfläche und einen vom Verschleiß der Überbrückungskupplung und weitgehend vom Betätigungsdruck unabhängigen Volumenstrom des Öls zu ermöglichen.

Sie wird gemäß der Erfindung durch die Merkmale des Anspruches 1 gelöst.

Indem sich mindestens eine Drossel in und/oder zwischen den Belagträgern oder den Lamellen der Überbrückungskupplung befindet, deren Wirkung unabhängig vom Verschleiß und der Fertigungsgenauigkeit der Belagnuten der Reibbeläge ist, kann eine optimale Durchströmung und ein vom Verschleiß unabhängiger Volumenstrom des Öls erreicht werden.

Die Unabhängigkeit vom Verschleiß und der Fertigungsgenauigkeit der Belagnuten ergibt sich dadurch, daß der Strömungswiderstand allein durch die Durchlaßöffnungen in den Belagträgern, die einzeln oder gemeinsam eine Drosselstelle bilden, bestimmt wird, indem der Strömungsquerschnitt der Nuten im Reibbelag um ein Vielfaches größer ist, als der der Durchlaßöffnungen.

Wird eine oder mehrere Ölkanalführungen von zwei oder mehreren benachbarten Lamellen, die keine Relativbewegung zueinander durchführen, jeweils von der belagabgewandten Seite eingeschlossen, so ist der Volumenstrom unabhängig vom Verschleiß, da die Ölkanäle bzw. die Strömungsquerschnitte nicht vom Verschleiß betroffen sind.

Indem das Öl durch ein durch die Nuten und Drosseln bestimmtes Ölführungssystem auf einer Seite des Belagträgers oder einer Lamelle radial zugeführt und auf einer Seite radial abgeführt wird, kann eine optimale Durchströmung erreicht werden. So kann z. B. das Öl radial von oben oder unten zugeführt, einfach oder mehrfach durch den Belagträger oder durch die Lamelle von einer Seite auf die andere Seite geleitet und anschließend wieder radial abgeführt werden. Durch eine derartige Ölführung wird eine hohe und gleichmäßige Wärmeabfuhr ermöglicht.

Weisen die verwendeten Reibbeläge alle eine einheitliche Form auf, die aus einem einheitlichen Material oder auch aus zusammengesetzten Materialien mit verschiedenen Wärmeleitfähigkeiten bestehen können, so entsteht der Vorteil, daß die Fertigungskosten gesenkt werden können, da eine einheitliche Fertigung mit größerer Stückzahl ermöglicht wird.

Um dies zu ermöglichen, weisen die Reibbeläge eine Struktur auf, die, wenn man zwei Reibbeläge gegeneinander verdreht, ein Ölführungssystem bilden.

Indem die Reibbeläge Nuten, die nach außen geöffnet und nach innen geschlossen und Nuten, die nach außen geschlossen und nach innen geöffnet sind, aufweisen, die zudem regelmäßig oder unregelmäßig über den Umfang verteilt sind, wird ermöglicht, daß bei bestimmten Verdrehwinkeln zweier Reibbeläge gegeneinander ein Ölführungssystem gebildet wird, das, wenn sich eine Drossel im Belagträger oder in der Lamelle befindet, das Öl auf einer Seite zuführt und auf der anderen Seite wieder abführt.

Es können auch durch einen einheitlichen Reibbelag mehrere Ölführungssysteme gebildet werden, indem die Struktur in der Art gestaltet ist, daß mit verschiedenen Verdrehwinkeln verschiedene Systeme entstehen. Dies beinhaltet den Vorteil, daß das Ölführungssystem auf die erforderliche Wärmeabfuhr eingestellt werden kann.

Eine noch größere Anzahl an Ölführungssystemen entsteht dann, wenn zwei verschiedene Reibbeläge, die sich in ihrer Formgebung und möglicherweise in ihrer Materialzusammensetzung unterscheiden, verwendet werden.

Bei verschiedenen Reibbelägen ist es möglich, wie bei dem einheitlichen Reibbelag, verschiedene Verdrehwinkel zur Bildung verschiedener Ölführungssysteme zu nutzen.

Wird im Bereich der Ölzuführung eine Volumenstrombegrenzung eingesetzt, so wird ermöglicht, daß der Volumenstrom des Öls unabhängig vom Betätigungsdruck und unabhängig von der Drehzahl der Überbrückungskupplung ist.

Um diese Zielsetzung zu erreichen, kann beispielsweise die Volumenstrombegrenzung durch eine oder mehrere Blattfedern gebildet werden.

Diese können am äußeren Umfang auf der ölzufließenden Seite auf dem Belagträger bzw. der Lamelle in Vertiefungen so angebracht sein, daß ein Ende mit dem Belagträger bzw. der Lamelle fest verbunden ist, beispielsweise durch Punktschweißen oder Nieten und das andere bewegliche Ende in Richtung einer in dem Belagträger bzw. der Lamelle befindlichen Durchlaßöffnung zeigt und bedingt durch eine Krümmung der Blattfeder um ihre Querachse von dem Belagträger bzw. der Lamelle abgehoben ist. Die Blattfeder ist so angebracht, daß sie, wenn sie keine Krümmung aufweisen würde, die Durchlaßöffnung teilweise verdecken würde. Das fixierte Ende kann sich alternativ zum Rand oder zum Mittelpunkt des Belagträgers bzw. der Lamelle hin befinden.

Steigt nun das Druckgefälle, welches abhängig vom Volumenstrom des Öls durch die Durchlaßöffnung ist, zwischen ölzufließender und ölabfließender Seite des Belagträgers bzw. der Lamelle an, so entsteht eine Kraft, die auf das bewegliche Ende der Blattfeder in Richtung Belagträger bzw. Lamelle wirkt und damit die Durchlaßöffnung um einen Teilquerschnitt verschließt. Damit wird der Volumenstrom bei hohen Drücken begrenzt. Der ständig geöffnete Teilquerschnitt der Durchlaßöffnung gewährleistet zudem eine Mindest-Durchströmung der Kupplung.

Die Blattfeder sollte so ausgelegt sein, daß keine Sprungfunktion entsteht. Dies würde sich negativ auf die Regelung der Kupplung auswirken.

Es wird also durch eine derartige Konstruktion eine Regelung des Volumenstroms erreicht, die unabhängig von der Drehzahl ist. Zudem tritt bei der beschriebenen Blattfeder nahezu keine Reibungshysterese auf, die Konstruktion ist kostengünstig und es wird eine hohe Betriebssicherheit erreicht, indem immer ein Teilquerschnitt der Durchlaßöffnung geöffnet bleibt, auch dann, wenn die Blattfeder die Durchlaßöffnung nicht mehr öffnet. Eine Mindestkühlung ist damit immer gewährleistet.

In der Zeichnung ist ein Ausführungsbeispiel der Erfindung dargestellt.

In der Beschreibung und in den Ansprüchen sind zahlreiche Merkmale im Zusammenhang dargestellt und beschrieben.

Der Fachmann wird die Merkmale zweckmäßigerweise auch einzeln betrachten und zu sinnvollen Kombinationen zusammenfassen.
Es zeigen:

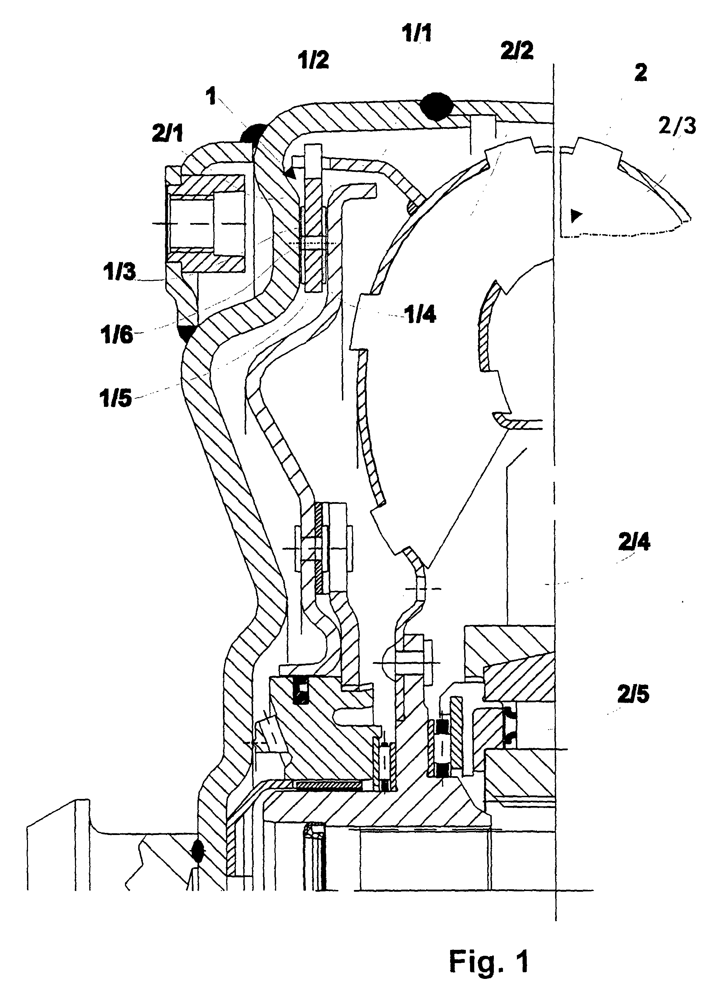

- Fig. 1: Gesamtdarstellung einer Überbrückungskupplung mit einem Belagträger oder einer Lamellen in der sich eine Drosselstelle befindet;

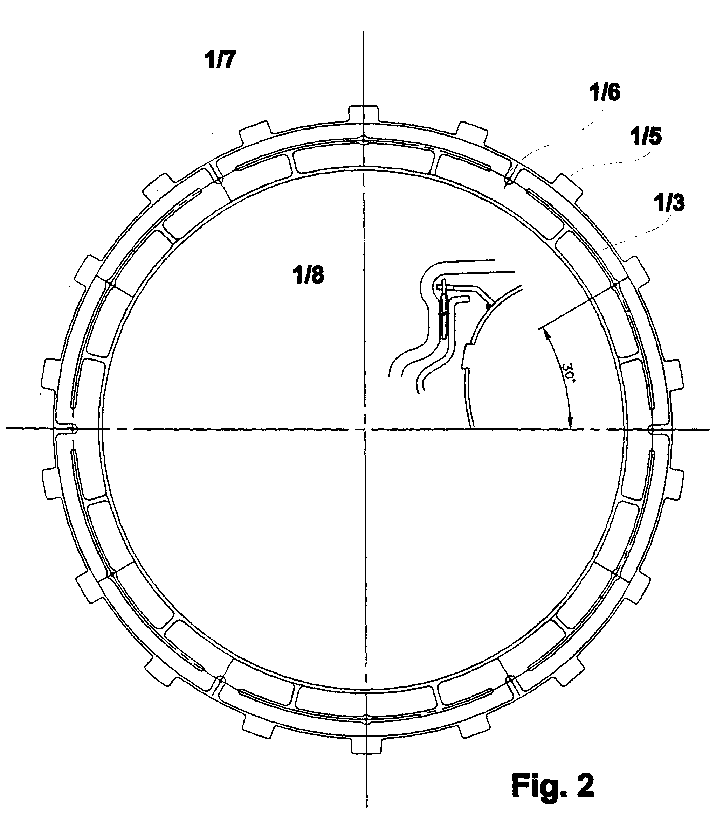

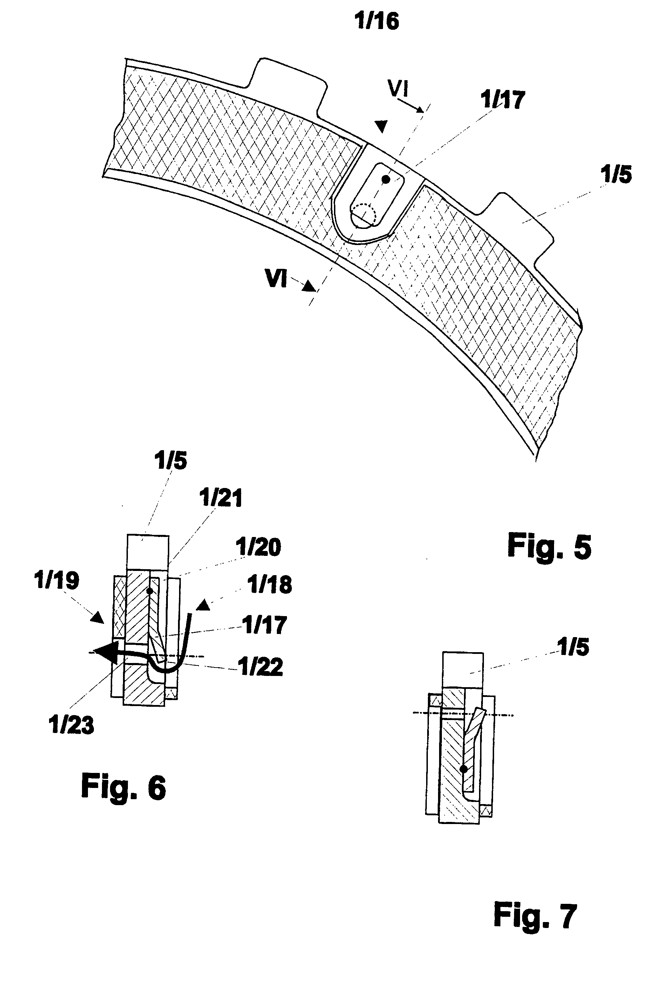

- Fig. 2: Darstellung der Struktur des verwendeten Reibbelages;
- Fig. 5: Volumenstrombegrenzung;
- Fig. 6: Schnitt der Volumenstrombegrenzung und
- Fig. 7: Alternative zu Fig. 6.

### Fig. 1

Als Anfahreinheit dient eine hydrodynamische Einheit in Form eines Wandlers 2. Dieser besteht aus einem Pumpenrad 2/3, das von einem Motor über ein Wandlergehäuse 2/1 angetrieben wird.

Der Wandler hat ferner ein Leitrad 2/4, das sich über einen Freilauf 2/5 und eine Leitradwelle abstützt. Das Pumpenrad 2/3 und das Leitrad 2/4 arbeiten mit einem Turbinenrad 2/2 in einem hydrodynamischen Kreislauf zusammen.

Zur Überbrückung des Wandlers wird eine Überbrückungskupplung 1 verwendet.

Die Überbrückungskupplung 1 setzt sich zusammen aus einem Träger des Belagträgers bzw. der Lamellen 1/1, der mindestens einen Belagträger bzw. eine Lamelle 1/5 zwischen einem Kupplungskolben 1/2 und einem Wandlergehäuse 2/1 hält. Der Lamellenträger 1/1 ist mit dem Turbinenrad 2/2 fest verbunden. Damit besitzen das Turbinenrad 2/2, der Träger des Belagträgers bzw. der Lamellen 1/1 und der Belagträger bzw. die Lamelle 1/5 die gleiche Umdrehungsgeschwindigkeit.

Reibbeläge 1/3, 1/4 können auf dem Belagträger 1/5 beidseitig oder auf dem Kupplungskolben 1/2 und dem Wandlergehäuse 2/1 aufgebracht sein. Im Belagträger bzw. in der Lamelle 1/5 befindet sich mindestens eine Drossel 1/6, von der sich mindestens eine mit einer Nut im Reibbelag deckt.

### Fig. 2

Ein Ölstrom wird zur Kühlung bei geschlossener Überbrükungskupplung oder einer mit Schlupf beaufschlagten Überbrückungskupplung von außen durch mindestens eine äußere Belagnut 1/7, die nach innen abgeschlossen ist, zugeführt und durch mindestens eine Drossel 1/6 durch den Belagträger bzw. Lamelle 1/5 geleitet. Auf der anderen Seite des Belagträgers bzw. der Lamelle 1/5 wird das Öl durch eine im zweiten Reibelag 1/4, der beispielsweise um dreißig Grad zum ersten Reibbelag 1/3 verdreht ist, befindliche innere Belagnut 1/8 aus dem Belagträger bzw. aus der Lamelle herausgeleitet.

### Fig. 5/Fig. 6/Fig. 7

Auf dem Belagträger bzw. auf der Lamelle 1/5 ist mindestens eine Volumenstrombegrenzung 1/16, beispielsweise in Form einer Blattfeder 1/17, untergebracht.

Diese können am äußeren Umfang auf der ölzufließenden Seite 1/18 auf dem Belagträger bzw. der Lamelle 1/5 in Vertiefungen 1/20 so angebracht sein, daß ein Ende 1/21 mit dem Belagträger bzw. der Lamelle 1/5 fest verbunden ist, beispielsweise durch Punktschweißen oder Nieten, und das andere bewegliche Ende 1/22 in Richtung einer in dem Belagträger bzw. der Lamelle 1/5 befindlichen Durchlaßöffnung 1/23 zeigt und, bedingt durch eine Krümmung der Blattfeder 1/17, um ihre Querachse von dem Belagträger bzw. der Lamelle 1/5 abgehoben ist. Die Blattfeder 1/17 ist so angebracht, daß sie, wenn sie keine Krümmung aufweisen würde, die Durchlaßöffnung 1/23 teilweise verdecken würde. Das fixierte Ende 1/21 kann sich alternativ zum Rand oder zum Mittelpunkt (siehe Fig. 7) des Belagträgers bzw. der Lamelle 1/5 hin befinden. Die Blattfeder 1/17 kann radial, tangential oder auch in beliebiger Richtung ausgerichtet sein.

Steigt nun das Druckgefälle, welches abhängig vom Volumenstrom des Öls durch die Durchlaßöffnung 1/23 ist, zwischen ölzufließender 1/18 und ölabfließender Seite 1/19 des Belagträgers bzw. der Lamelle 1/5 an, so entsteht eine Kraft, die auf das bewegliche Ende 1/22 der Blattfeder 1/17 in Richtung Belagträger bzw. Lamelle 1/5 wirkt und damit die Durchlaßöffnung 1/23 um einen Teilquerschnitt 1/24 verschließt. Damit wird der Volumenstrom bei hohen Drücken begrenzt. Der ständig geöffnete Teilquerschnitt 1/24 der Durchlaßöffnung 1/23 gewährleistet zudem eine Mindest-Durchströmung der Kupplung.

Die Blattfeder 1/17 sollte so ausgelegt sein, daß keine Sprungfunktion entsteht. Dies würde sich negativ auf die Regelung der Kupplung auswirken.

Es wird also durch eine derartige Konstruktion eine Regelung des Volumenstroms erreicht, die unabhängig von der Drehzahl und weitestgehend unabhängig vom Absolutdruck ist. Zudem tritt bei der beschriebenen Blattfeder 1/17 nahezu keine Reibungshysterese auf, die Konstruktion ist kostengünstig und es wird eine hohe Betriebssicherheit erreicht, indem immer ein Teilquerschnitt 1/24 der Durchlaßöffnung 1/23 geöffnet bleibt, auch dann, wenn die Blattfeder 1/17 die Durchlaßöffnung 1/23 nicht mehr öffnet. Eine Mindestkühlung ist damit immer gewährleistet.

### Bezugszeichen

### Überbrückungskupplung

- 1: gesamte Überbrückungskupplung
- 1/1: Lamellenträger
- 1/2: Kupplungskolben
- 1/3: Reibbelag
- 1/4: Reibelag
- 1/5: Belagträger oder Lamelle
- 1/6: Drossel
- 1/7: äußere Belagnut
- 1/8: innere Belagnut

- 1/16: **Volumenstrombegrenzung**
- 1/17: Blattfeder
- 1/18: ölzufließende Seite
- 1/19: ölabfließende Seite
- 1/20: Vertiefung
- 1/21: fixiertes Ende der Blattfeder
- 1/22: bewegliches Ende der Blattfeder
- 1/23: Durchlaßöffnung
- 1/24: Teilquerschnitt

### Wandler

- 2: gesamter Wandler
- 2/1: Wandlergehäuse
- 2/2: Turbinenrad
- 2/3: Pumpenrad
- 2/4: Leitrad
- 2/5: Freilauf

## Patentansprüche

1. Hydrodynamischer Wandler (2) mit Überbrückungskupplung (1), wobei die Überbrückungskupplung (1) aus einem Kupplungskolben (1/2) und einer Lamelle (1/5) besteht, die Lamelle (1/5) zwischen dem Kupplungskolben (1/2) und dem Wandlergehäuse (2/1) angeordnet ist und mit dem Turbinenrad (2/2) des hydrodynamischen Wandlers (2) verbunden ist, wobei sowohl zwischen dem Wandlergehäuse (2/1) und der Vorderseite der Lamelle (1/5) als auch dem Kupplungskolben (1/2) und der Rückseite der Lamelle (1/5) ein Reibbelag (1/3, 1/4) angeordnet ist, der Reibbelag (1/3, 1/4) zur Ölführung Kanäle aufweist, bei Druckbeaufschlagung des Kupplungskolbens (1/2) eine Wirkverbindung zwischen dem Wandlergehäuse (2/1) und dem Turbinenrad (2/2) entsteht und die Lamelle (1/5) vom Ölstrom umströmt wird, dadurch **gekennzeichnet**, daß die Reibbeläge (1/3, 1/4) auf der Lamelle (1/5) angebracht sind und der Ölstrom von einer Seite der Lamelle (1/5) nach Durchströmen von Kanälen eines Reibbelages diametral auf die andere Seite durch die Lamelle (1/5) hindurchgeführt ist, wobei im Bereich der Durchführungen (1/23) auf der Lamelle (1/5) eine Volumenstrombegrenzung angebracht ist.

2. Hydrodynamischer Wandler (2) mit Überbrückungskupplung (1) nach Anspruch 1, dadurch **gekennzeichnet**, daß die verwendeten Reibbeläge (1/3, 1/4) eine einheitliche Form aufweisen.

3. Hydrodynamischer Wandler (2) mit Überbrückungskupplung (1) nach Anspruch 1, dadurch **gekennzeichnet**, daß die Reibbeläge (1/3, 1/4) sich in ihrer Formgebung unterscheiden.

4. Hydrodynamischer Wandler (2) mit Überbrückungskupplung (1) nach Anspruch 2 oder 3, dadurch **gekennzeichnet**, daß die Reibbeläge (1/3, 1/4) Nuten (1/7) aufweisen, die in radialer Richtung nach außen offen und in radialer Richtung nach innen geschlossen sind und Nuten (1/8) aufweisen, die in radialer Richtung nach außen geschlossen und nach innen offen sind.

5. Hydrodynamischer Wandler (2) mit Überbrückungskupplung (1) nach Anspruch 4, dadurch **gekennzeichnet**, daß die Reibbeläge (1/3, 1/4) eines Reibbelagpaares gegeneinander verdreht angebracht sind.

6. Hydrodynamischer Wandler (2) mit Überbrückungskupplung (1) nach einem der vorausgegangenen Ansprüche, dadurch **gekennzeichnet**, daß die Volumenstrombegrenzung durch mindestens eine Blattfeder (1/17) gebildet wird, wobei diese jeweils einen Teilquerschnitt (1/24) einer Durchführung abdeckt.

## Claims

1. Hydrodynamic converter (2) with a bridging clutch (1), wherein the bridging clutch (1) consists of a clutch piston (1/2) and a disc (1/5), the disc (1/5) is disposed between the clutch piston (1/2) and the converter housing (2/1) and connected to the impeller (2/2) of the hydrodynamic converter (2), wherein a friction lining (1/3, 1/4) is disposed between both the converter housing (2/1) and the front side of the disc (1/5) and between the clutch piston (1/2) and the rear side of the disc (1/5), the friction lining (1/3, 1/4) comprises ducts for carrying oil, when the clutch piston (1/2) is pressurised an operative connection is established between the converted housing (2/1) and the impeller (2/2) and an oil flow flows around the disc (1/5), characterised in that the friction linings (1/3, 1/4) are fitted on the disc (1/5) and the oil flow is passed diametrically through the disc (1/5) from one side of the disc (1/5) to the other after flowing through ducts in a friction lining, wherein a volumetric flow limiting mechanism is fitted on the disc (1/5) in the region of the passages (1/23).

2. Hydrodynamic converter (2) with a bridging clutch (1) according to Claim 1, characterised in that the friction linings (1/3, 1/4) which are used have a uniform shape.

3. Hydrodynamic converter (2) with a bridging clutch (1) according to Claim 1, characterised in that the friction linings (1/3, 1/4) have different shapes.

4. Hydrodynamic converter (2) with a bridging clutch (1) according to Claim 2 or 3, characterised in that the friction linings (1/3, 1/4) comprise grooves (1/7) which are open to the outside in the radial direction and closed to the inside in the radial direction and grooves (1/8) which are closed to the outside and open to the inside in the radial direction.

5. Hydrodynamic converter (2) with a bridging clutch (1) according to Claim 4, characterised in that the friction linings (1/3, 1/4) of a pair of friction linings are fitted such that they are turned relative to one another.

6. Hydrodynamic converter (2) with a bridging clutch (1) according to any one of the preceding Claims, characterised in that the volumetric flow limiting mechanism is formed by at least one leaf spring (1/17), wherein this in each case covers a partial cross section (1/24) of a passage.

## Revendications

1. Convertisseur hydrodynamique (2) équipé d'un embrayage de court-circuit (1), l'embrayage de court-circuit (1) étant composé d'un piston d'embrayage (1/2) et d'un disque (1/5), le disque (1/5) étant disposé entre le piston d'embrayage (1/2) et le corps (2/1) du convertisseur et étant relié à la roue de turbine (2/2) du convertisseur hydrodynamique (2), une garniture de friction (1/3, 1/4) étant disposée aussi bien entre le corps (2/1) du convertisseur et la face avant du disque (1/5) qu'entre le piston d'embrayage (1/2) et la face arrière du disque (1/5), la garniture de friction (1/3, 1/4) comportant des canaux pour conduire l'huile, une liaison effective s'établissant entre le corps (2/1) du convertisseur et la roue de turbine (2/2) en présence d'une sollicitation du piston d'embrayage (1/2), et le disque (1/5) étant baigné par le courant d'huile, **caractérisé** en ce que les garnitures de friction (1/3, 1/4) sont montées sur le disque (1/5) et que le courant d'huile provenant d'un côté du disque (1/5), après avoir parcouru les canaux d'une garniture de friction dans une direction diamétrale, est envoyé à l'autre côté en passant à travers le disque (1/5), une limitation du courant volumique étant agencée sur le disque (1/5) dans la région des traversées (1/23).

2. Convertisseur hydrodynamique (2) équipé d'un embrayage de court-circuit (1) selon la revendication 1,**caractérisé** en ce que les garnitures de friction utilisées (1/3, 1/4) comportent toutes une forme identique.

3. Convertisseur hydrodynamique (2) équipé d'un embrayage de court-circuit (1) selon la revendication 1,**caractérisé** en ce que les garnitures de friction (1/3, 1/4) diffèrent de par leur conformation.

4. Convertisseur hydrodynamique (2) équipé d'un embrayage de court-circuit (1) selon la revendication 2 ou 3, **caractérisé** en ce que les garnitures de friction (1/3, 1/4) comportent des rainures (1/7) qui sont ouvertes radialement vers l'extérieur et sont fermées radialement vers l'intérieur, et des rainures (1/8) qui sont fermées radialement vers l'extérieur et ouvertes radialement vers l'intérieur.

5. Convertisseur hydrodynamique (2) équipé d'un embrayage de court-circuit (1) selon la revendication 4, **caractérisé** en ce que les garnitures de friction (1/3, 1/4) d'une paire de garnitures de friction sont décalées angulairement l'une par rapport à l'autre.

6. Convertisseur hydrodynamique (2) équipé d'un embrayage de court-circuit (1) selon l'une des revendications précédentes, **caractérisé** en ce que la limitation du courant volumique est formée par au moins un ressort à lames (1/17) qui recouvre une section partielle (1/24) d'une traversée.
